# EUROPEAN PATENT APPLICATION

(11) **EP 4 262 170 A1**
(43) Date of publication of application: **18.10.2023**
(21) Application number: 23167411.0
(22) Date of filing: 11.04.2023
(51) Int. Cl.: H04L 45/24

(54) **MULTIPATH COMMUNICATION AND CONTROL**

(30) Priority: 11.04.2022 US 202263329661 P
(71) Applicant: Comcast Cable Communications, LLC, Philadelphia, PA 19103 (US)
(72) Inventor: PINHEIRO, Ana, Philadelphia, 19103 (US); KAUR, Samian, Philadelphia, 19103 (US); JAKSA, Robert, Philadelphia, 19103 (US)
(74) Representative: V.O.

(57) **Abstract**

Methods, apparatuses, and systems are described for receiving a request to connect a user device to a first network. The method may include sending a policy to the user device based on the request, wherein the policy may comprise a rule for establishing a connection. The rule may be based on an origin of the connection on the first network. The method may include determining a first subflow of the connection based on a rule according to a first path. The method may also include receiving first data based on the first subflow.

## Description

### CROSS-REFERENCE TO RELATED APPLICATIONS

This application claims the benefit of U.S. Provisional Application No. 63/329,661, filed April 11, 2022, which is incorporated herein in its entirety.

### BACKGROUND

Network operators provide access to networks and the Internet. Some network operators may provide multiple types of services for access. For example, a multiple service operator (MSO) may provide access through both Wi-Fi (e.g., IEEE 802.11 based protocols) access points and cellular nodes (e.g., 3GPP 5G Node B). A mobile network operator (MNO) may provide access to networks and the Internet through cellular nodes. Connection-based communications may cause conflict between the user account restrictions and efficient communication logistics. These and other communications may further challenge signaling and control associated with such networks.

### SUMMARY

It is to be understood that both the following general description and the following detailed description are exemplary and explanatory only and are not restrictive. Methods, apparatuses, and systems for improved network accessibility are described.

A multipath connection may be formed to connect one or more endpoints with the freedom to transmit data over different paths. Some endpoints may lack support for multipath communications, and a transport converter may provide backwards compatibility for endpoints that do not support multipath communications. The transport converter may provide multipath availability to those endpoints or portions of the connections that support multipath connections.

With these freedoms, the transport converter may become a bottleneck for communications between endpoints, and a policy may be used to control endpoint and node multipath capabilities. For example, a policy may include rules that determine when endpoints or nodes can use multipath communications and when those multipath communications may be utilized to avoid overuse of the transport converter. Rules may be based on a plurality of network parameters and combinations thereof. For example, a rule may relate to the access point or physical cell identity serving as the origin for access to the network. Physical device location (e.g., geo-location) of the endpoints or nodes of the communication path may also serve as a basis for a rule regarding multipath communications.

### BRIEF DESCRIPTION OF THE DRAWINGS

The accompanying drawings, which are incorporated in and constitute a part of the present description serve to explain the principles of the apparatuses and systems described herein:
**FIG. 1** shows an example system in accordance with one or more implementations of the present disclosure;
**FIG. 2** shows an example communication architecture in accordance with one or more implementations of the present disclosure;
**FIG. 3** shows an example communication architecture having an interworking function in accordance with one or more implementations of the present disclosure;
**FIG. 4** shows an example communication architecture in accordance with one or more implementations of the present disclosure;
**FIG. 5** shows an example protocol stack in accordance with one or more implementations of the present disclosure;
**FIG. 6** shows an example communication link in accordance with one or more implementations of the present disclosure;
**FIG. 7** shows an example control framework in accordance with one or more implementations of the present disclosure;
**FIG. 8** shows an example policy in accordance with one or more implementations of the present disclosure;
**FIG. 9** shows an example encoding accordance with one or more implementations of the present disclosure;
**FIG. 10** shows a flowchart of an example method in accordance with one or more implementations of the present disclosure;
**FIG. 11** shows a flowchart of an example method in accordance with one or more implementations of the present disclosure; and
**FIG. 12** shows an example method in accordance with one or more implementations of the present disclosure.

### DETAILED DESCRIPTION

As used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another configuration includes from the one particular value and/or to the other particular value. When values are expressed as approximations, by use of the antecedent "about," it will be understood that the particular value forms another configuration. It will be further understood that the endpoints of each of the ranges are significant both in relation to the other endpoint, and independently of the other endpoint.

"Optional" or "optionally" means that the subsequently described event or circumstance may or may not occur, and that the description includes cases where said event or circumstance occurs and cases where it does not.

Throughout the description and claims of this specification, the word "comprise" and variations of the word, such as "comprising" and "comprises," means "including but not limited to," and is not intended to exclude other components, integers or steps. "Exemplary" means "an example of' and is not intended to convey an indication of a preferred or ideal configuration. "Such as" is not used in a restrictive sense, but for explanatory purposes.

It is understood that when combinations, subsets, interactions, groups, etc. of components are described that, while specific reference of each various individual and collective combinations and permutations of these may not be explicitly described, each is specifically contemplated and described herein. This applies to all parts of this application including, but not limited to, steps in described methods. Thus, if there are a variety of additional steps that may be performed it is understood that each of these additional steps may be performed with any specific configuration or combination of configurations of the described methods.

This detailed description may refer to a given entity performing some action. It should be understood that this language may in some cases mean that a system (e.g., a computer) owned and/or controlled by the given entity is actually performing the action.

As will be appreciated by one skilled in the art, hardware, software, or a combination of software and hardware may be implemented. Furthermore, the methods and systems may take the form of a computer program product on a computer-readable storage medium (e.g., non-transitory) having processor-executable instructions (e.g., computer software) embodied in the storage medium. Any suitable computer-readable storage medium may be utilized including hard disks, CD-ROMs, optical storage devices, magnetic storage devices, memrestors, Non-Volatile Random Access Memory (NVRAM), flash memory, or a combination thereof.

Throughout this application reference is made to block diagrams and flowcharts. It will be understood that each block of the block diagrams and flowcharts, and combinations of blocks in the block diagrams and flowcharts, respectively, may be implemented by processor-executable instructions. These processor-executable instructions may be loaded onto a special purpose computer or other programmable data processing instrument to produce a machine, such that the processor-executable instructions which execute on the computer or other programmable data processing instrument create a device for implementing the steps specified in the flowchart block or blocks.

These processor-executable instructions may also be stored in a non-transitory computer-readable memory or a computer-readable medium that may direct a computer or other programmable data processing instrument to function in a particular manner, such that the processor-executable instructions stored in the computer-readable memory produce an article of manufacture including processor-executable instructions for implementing the function specified in the flowchart block or blocks. The processor-executable instructions may also be loaded onto a computer or other programmable data processing instrument to cause a series of operational steps to be performed on the computer or other programmable instrument to produce a computer-implemented process such that the processor-executable instructions that execute on the computer or other programmable instrument provide steps for implementing the functions specified in the flowchart block or blocks.

Blocks of the block diagrams and flowcharts support combinations of devices for performing the specified functions, combinations of steps for performing the specified functions and program instruction means for performing the specified functions. It will also be understood that each block of the block diagrams and flowcharts, and combinations of blocks in the block diagrams and flowcharts, may be implemented by special purpose hardware-based computer systems that perform the specified functions or steps, or combinations of special purpose hardware and computer instructions.

The method steps recited throughout this disclosure may be combined, omitted, rearranged, or otherwise reorganized with any of the figures presented herein and are not intend to be limited to the four corners of each sheet presented.

The techniques disclosed herein may be implemented on a computing device in a way that improves the efficiency of its operation. As an example, the methods, instructions, and steps disclosed herein may improve the functioning of a computing device.

A multipath connection may be formed to connect one or more endpoints with the freedom to transmit data over different paths. Some endpoints may lack support for multipath communications, and a transport converter may provide backwards compatibility for endpoints that do not support multipath communications. The transport converter may provide multipath availability to those endpoints or portions of the connections that support multipath connections.

With these freedoms, the transport converter may become a bottleneck for communications between endpoints, and a policy may be used to control endpoint and node multipath capabilities. For example, a policy may include rules that determine when endpoints or nodes can use multipath communications and when those multipath communications may be utilized to avoid overuse of the transport converter. Rules may be based on a plurality of network parameters and combinations thereof. For example, a rule may relate to the access point or physical cell identity serving as the origin for access to the network. Physical device location (e.g., geo-location) of the endpoints or nodes of the communication path may also serve as a basis for a rule regarding multipath communications.

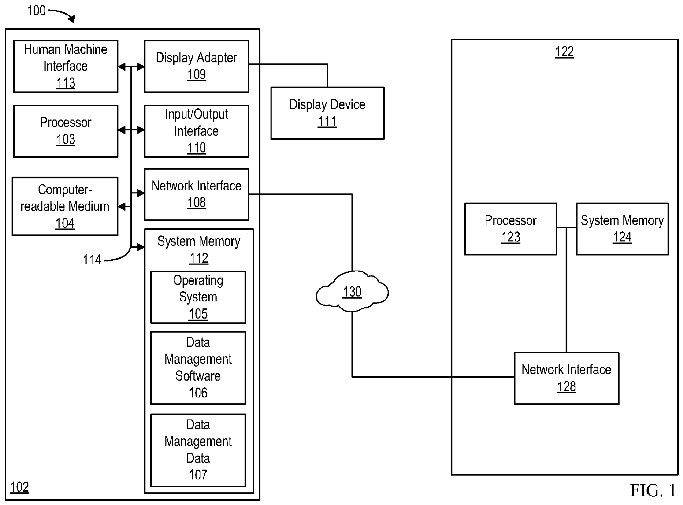

**FIG. 1** shows an example system **100** in accordance with one or more applications of the present disclosure. The system **100** may comprise a device **102,** a display device **111,** and one or more computing devices **122.** The device **102** may comprise one or more processors **103,** a system memory **112,** and a bus **114** that couples various components of the device **102** including the one or more processors **103** to the system memory **112.** In the case of multiple processors **103,** the device **102** may utilize parallel computing.

The bus **114** may comprise one or more of several possible types of bus structures, such as a memory bus, memory controller, a peripheral bus, an accelerated graphics port, and a processor or local bus using any of a variety of bus architectures.

The device **102** may operate on and/or comprise a variety of user device readable media (non-transitory). User device readable media may be any available media that is accessible by the device **102** and comprises, non-transitory, volatile and/or non-volatile media, removable and non-removable media. The system memory **112** has user device readable media in the form of volatile memory, such as random access memory (RAM), and/or non-volatile memory, such as read only memory (ROM). The system memory **112** may store data such as data management data **107** and/or programs such as operating system **105** and data management software **106** that are accessible to and/or are operated on by the one or more processors **103.**

The device **102** may also comprise other removable/non-removable, volatile/non-volatile user device storage media. The computer-readable medium **104** may provide non-volatile storage of user device code, user device readable instructions, data structures, programs, and other data for the device **102.** The computer-readable medium **104** may be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Any number of programs may be stored on the computer-readable medium **104.** An operating system **105** and data management software **106** may be stored on the computer-readable medium **104.** One or more of the operating system **105** and data management software **106** (e.g., mobile applications), or some combination thereof, may comprise program and the data management software **106.** Data management data **107** may also be stored on the computer-readable medium **104.** Data management data **107** may be stored in any of one or more databases known in the art. The databases may be centralized or distributed across multiple locations within the network **130.**

A user may enter commands and information into the device **102** via an input device. For example, the input devices may comprise, but are not limited to, a keyboard, pointing device (e.g., a computer mouse, remote control), a microphone, a joystick, a scanner, tactile input devices such as gloves, and other body coverings, motion sensor, and the like These and other input devices may be connected to the one or more processors **103** via a human machine interface **113** that may be coupled to the bus **114,** but may be connected by other interface and bus structures, such as a parallel port, game port, an IEEE 1394 Port (e.g., a Firewire port), a serial port, network interface **108,** and/or a universal serial bus (USB).

A display device **111** may also be connected to the bus **114** via an interface, such as a display adapter **109.** In an example, the device **102** may have more than one display adapter **109** and the device **102** may have more than one display device **111.** A display device **111** may comprise a monitor, an LCD (Liquid Crystal Display), light emitting diode (LED) display, television, smart lens, smart glass, and/or a projector. In addition to the display device **111,** other output peripheral devices may comprise components such as speakers and a printer which may be connected to the device **102** via Input/Output Interface **110.** Any step and/or result of the methods may be output (or caused to be output) in any form to an output device. Such output may be any form of visual representation, including, but not limited to, textual, graphical, animation, audio, tactile, and the like. The display device **111** and the device **102** may be part of one device, or separate devices.

The device **102** may operate in a networked environment using logical connections to one or more computing devices **122.** The computing device **122** may comprise a personal computer, computing station (e.g., workstation), portable computer (e.g., laptop, mobile phone, tablet device), smart device (e.g., smartphone, smart watch, activity tracker, smart apparel, smart accessory), security and/or monitoring device, a server, a router, a network computer, a peer device, edge device or other common network node, and the like. Logical connections between the device **102** and the computing device **122** may be made via a network **130.** Such network connections may be through a network interface **108.** A network interface **108** may be implemented in both wired and wireless environments.

Application programs and other executable program components such as the operating system **105** are shown herein as discrete blocks, although it is recognized that such programs and components may reside at various times in different storage components of the device **102,** and are executed by the one or more processors **103** of the device **102.** The computing device **122** may include all of the components described with regard to the device **102.**

The device **102** may comprise one or more components configured to communicate over electromagnetic waves or other mediums. The device **102** may be configured with one or more subscriber identity modules (SIM). The SIM may be stored in persistent memory, embedded, physical, or combinations thereof. In such a way, the SIM may form a credential circuit as data stored permanently or otherwise on the device **102.** The device **102** or SIM may be configured for Dual SIM Dual Standby (DSDS). For example, the primary SIM of the DSDS may be a physical SIM (pSIM) and the secondary SIM may be an embedded SIM (eSIM). The SIM may include one or more pairs of unique identifiers and keys. Information may be stored on a particular chip or combinations of chips, the computer-readable medium **104,** or otherwise.

The device **102** may be configured to communicate over a network interface **108.** The network interface **108** may be configure with a radio or other electromagnetic spectrum transceiver. The network interface **108** may be combined with a SIM, and identification numbers (e.g., international mobile subscriber identity, local area identity) and keys therein (e.g., ki), for secure communications.

The device **102** may be configured to communicate with the computing device **122** over a network **130.** Such communication paths may include wired communication technologies, wireless communication technologies, or combinations thereof. Wireless communication technologies may include various 3GPP standards (e.g., LTE, 5G) and Institute of Electrical and Electronics Engineers (IEEE) standards (e.g., 802.11). Wired communication technologies may include various IEEE standards (e.g., 802.3). While various communication technologies and standards are contemplated herein, various communication mediums (e.g., wire, air), standards making bodies (e.g., 3GPP, IETF, IEEE), and protocols are contemplated herein.

Communications protocols contemplated herein may be connectionless or connection-based. For example, Transmission Control Protocol (TCP) may be used to establish state-based or connection-based communication between a client (e.g., device **102**)**,** a computing device **122,** or components, hops, nodes, instances, functions there between, or combinations thereof. A protocol may define header and payload information for packets of information. Headers may define various configurations and settings associated with the transmitted payload. User Datagram Protocol (UDP) may be similarly used to and configured to provide a connection-based protocol (e.g., QUIC). Other protocols (e.g., Datagram Congestion Control Protocol (DCCP)) are contemplated for use in accordance with one or more implementations of the present disclosure.

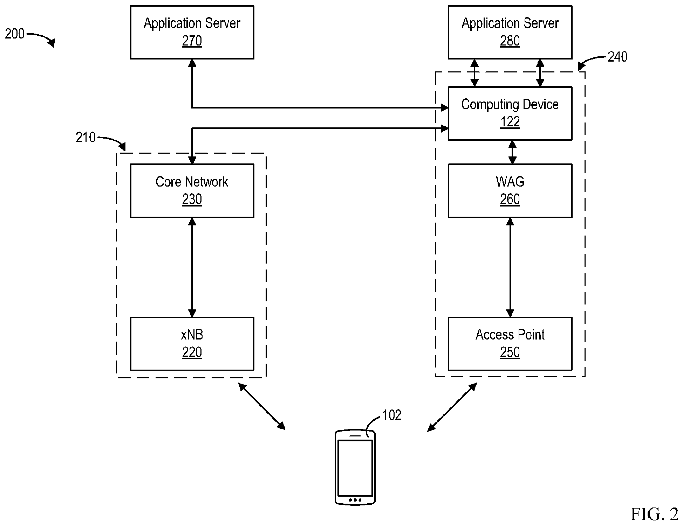

**FIG. 2** shows an example network **210** (e.g., a network of an MNO) that may include wireless communication protocols between the device **102** and the cellular base station **220** (e.g., eNB, gNB, xNB), which may be part of a radio access network based on various radio access technologies. The base station **220** may be considered an origin of a connection because it is the outward facing node from the network **210** to the device **102.** For example, an origin may be a node of a network (e.g., network **210**) that communicates with devices off of the network (e.g., device **102,** application server **270**)**.** The origin may be an edge node or device. The radio access network may be associated with a network. A network (e.g., public land mobile network (PLMN)) may maintain the radio access network and the associated core network **230.** The network (e.g., an MNO) may issue subscriptions for the device **102** to access the network **210.** The network may include communications hardware and software to support various protocols and components (e.g., 3GPP 5G, IEEE 802.11). The terms MVNO, MSO, PLMN, MNO, and other operator indicators are intended for designation (e.g., first, second, third) to distinguish between different networks and are not intended to be rigid as terminology and scope of these and other terms is evolving in the field.

Another communication path may be established between the device **102** and the computing device **122** over a network **240** (e.g., a network of an MSO) having a Wi-Fi or IEEE 802.11 access point **250.** The Wi-Fi or IEEE 802.11 access point **250** may be based on a cable modem or cable modem termination system (CMTS). The access point **250** may be configured to communicate with a wireless access gateway **260.** The access point **250** may be considered an origin of a connection because it is the outward facing node from the network **240** to the device **102.** For example, an origin may be a node of a network (e.g., network **240**) that communicates with devices off of the network (e.g., device **102,** application server **270**)**.** The wireless access gateway **260** may route data packets from the access point **250** to the network **130.** A network (e.g., an MSO) may maintain the access point **250** and the associated wireless access gateway **260.** The network may issue subscriptions for the device **102** to access one or more of the networks (e.g., network **210,** network **240**)**.** The subscriptions may be issued in packages (e.g., subscription packages) and stored or unpacked on a SIM, an embedded SIM, or otherwise. The network associated with the access point **250** may be different than the network associated with the radio access network.

A communication path may be defined by the individual hops made along the path between components, instances, functions, servers, and interfaces. A path may be unique in that the set of hops are unique. For example, a path comprising hops between A, B, and C may be considered unique from a path that consists of A and B or a path that comprises A, B, and D. A network may be defined as a set of components, instances, functions, servers, interfaces, other implements and combinations thereof that are configured to communicate or have access to, or communicate with, one another. The network may consist of those components, instances, functions, servers, interfaces, other implements and combinations that may be managed by a network provider and may be configured to communicate. A network may be a logical grouping of the set (e.g., subnet). A network may be virtually grouped logically (e.g., virtual private network) or contain portions that are virtually grouped logically.

The communication paths may include wired communication technologies, wireless communication technologies, or combinations thereof. Wireless communication technologies may include various 3GPP standards (e.g., LTE, 5G) and Institute of Electrical and Electronics Engineers (IEEE) standards (e.g., 802.11). Wired communication technologies may include various IEEE standards (e.g., 802.3). While various communication technologies and standards are contemplated herein, various communication mediums (e.g., wire, air), standards making bodies (e.g., 3GPP, IETF, IEEE), and protocols are contemplated herein.

The core network **230** and wireless access gateway **260** are used as examples for context. It should be appreciated that standards may change the names of these entities as technologies improve and progress. The core network **230** and the wireless access gateway **260** may be configured to directly communicate over an interface. For example, an access and mobility function (AMF), session management function (SMF), policy control function (PCF), other functions or instances, or combinations thereof may perform some or all of the steps described herein. The computing device **122** may be configured to perform all or some of the steps described. For example, the computing device **122** may orchestrate SIM provisioning based on a location pattern, a quantity of time, data consumption, or combinations thereof according to the device **102.** The computing device **122** may be configured to send a request to the device **102** to determine whether the device **102** is interested in connecting over the MSO network with eSIM credentials. The computing device **122** may be or may be connected with a remote SIM provisioning system (SM-DP+). The device **102** may connect with the computing device **122,** through the computing device **122,** or according to the computing device **122** to obtain the eSIM or eUICC.

The computing device **122** may be associated with either the network **210** or the network **240.** The computing device **122** may be independent of the network **210** and the network **240.** For example, the computing device **122** may serve as an intermediary, receiving data from the device **102** over either of the networks **210, 240** or another network and providing a provisioning of the identifier and key. The identifier and the key may be pushed or pulled.

The computing device **122** may include instructions to serve as a proxy or proxy server (e.g., an MPTCP proxy) for the plurality of paths formed between application servers **270, 280** and the device **102.** For example, one or more application servers **270, 280** may be configured to send and receive communications with the computing device **122** based on communications from the device **102** over one or more paths associated with networks **210, 240.**

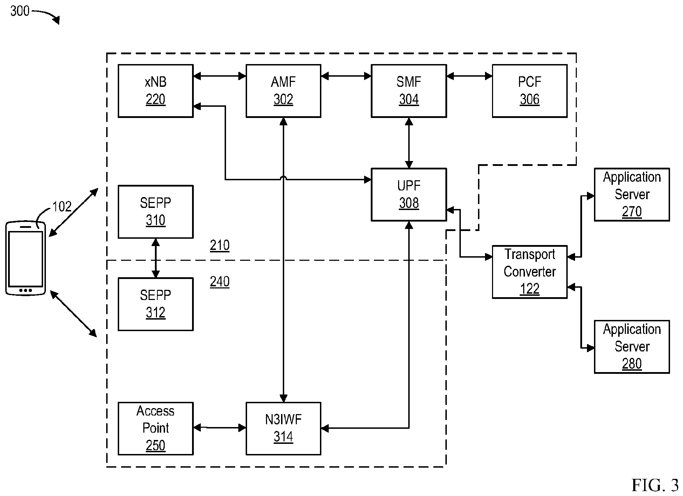

**FIG. 3** shows an example architecture **300** with an interworking function **314** in accordance with one or more implementations of the present disclosure. The interworking function **314** may be connected with the user plane function **308** of network **240.** The interworking function **314** may be associated with one or more of network **210** and/or network **240.** The interworking function **314** may provide the device **102** access to the computing device **122.** The user plane functions **308** may be connected over an N9 interface. The N9 interface may be encapsulated by the connection provided by SEPP **310, 312.** The policy control function **306** may be configured to communicate with the computing device **122** over an N6 interface while each user plane function is individually connected with the computing device **122** over respective interfaces. These interfaces may be an N6 interface, an Nx interface, or another applicable interface. As an example, the computing device **122** may be part of a data network associated with a PLMN (e.g., network **210, 240**)**.** The data network may be separate from a voice network associated with either of the networks **210, 240.** The computing device **122** may be part of a network independent from either of the networks **210, 240** and hosted by a third party. As an example, the computing device **122** may be provisioned on a cloud-computing server accessible over the Internet.

The access and mobility management function **302** may comprise the entry function of the control plane and may connect to the core network. The access and mobility management function **302** may terminate the non-access stratum (NAS) of the device **102.** The access and mobility management function **302** may also perform access authentication for the device **102** and mobility management. Additionally, the access and mobility management function **302** may route session management messages to the one or more session management functions **304.**

The session management function **304** may be responsible for termination of a session based on the session management function from the device **102.** The session management function **304** may allocate Internet Protocol addresses and provide control of the user plane function **308** (UPF). The session management function **304** may also terminate sessions associated with the policy control function **306** (PCF). The session management function **304** may communicate with the access and mobility management function **302** over the N11 interface and the policy control function **254** over the N7 interface.

The policy control function **306** may enable policy rules described herein and enable control functions for enforcement. These rules may be distributed and enforced at the device **102** or other functions described herein. As an example, the policy control function **306** may enable route and slice selection.

The user plane function **308** may implement the packet forwarding and routing for user plane data in the role of the inter-radio access technology (RAT) and intra-RAT anchor. The user plane function **308** may also provide IP address allocation when instructed by the session management function **304** and can provide gating or downlink data buffering. The user plane function **308** may communicate with the session management function **304** over the N4 interface. The user plane function **308** may communicate with the data network associated with the application servers **270, 280** over an N6 interface. The application servers **270, 280** may be part of either network **210, 240** or available on the Internet or other data networks not associated with the network **210, 240.**

In an example, the interworking function **314** or other functions may be configured to authenticate with the network **210.** For example, the device **102** may include a credential circuit comprising authentication credentials for network **210.** The device **102** may include a credential circuit comprising authentication credentials (e.g., identifiers, keys) for network **240.** The authentication credentials may provide cross-validation and access to either network **210, 240.** For example, the authentication credentials may be associated with network **240** and traverse the interworking function **314,** providing access to network **240** from the device **102.** The same authentication credentials may indicate access, from network **240** to network **210.** An indication may be provided from the network **240** to network **210** indicating that access is authorized without providing credentials specific to network **210.** For example, access to network **210** may be achieved with authentication credentials for network **240** or vice versa. As an example, in combination or separate, the authentication credentials may be based on an eSIM or embedded SIM associated with the device **102.** The authentication credentials may be issued by the network **240** associated with the interworking function **314.** The authentication credentials may provide access to the network of the network 210.

The example architecture **300** may include an interworking function **314.** The interworking function **314** may be a non-3GPP interworking function (N3IWF). The interworking function **314** may be associated with an access point **250** of one of the networks (e.g. network **240**)**.** As shown in **FIG. 3****,** an interworking function **314** may be associated with an access point **250** of the other of the networks (e.g., network **210**)**.** The interworking function **314** may provide access to 3GPP functions from a non-3GPP access point. As an example, the access point **250** may be configured to communicate over IEEE 802.11 or other protocols. For example, the access point **250** may be one or more hotspots associated with a public, corporate, or otherwise access network. The interworking function **314** may allow PDU session establishment and user plane functionalities (e.g., quality of service). For example, the device **102** may be configured to connect to a network having 3GPP functions (e.g., packet-switched gateways, user plane functions). For example, the interworking function **314** may provide the device **102** access to user plane function **308.** As an example, the interworking function **314** may determine corresponding commands or instructions based on communications from the device **102** sent over the access point **250** for translation to the user plane function **308.**

As shown in **FIG. 3****,** the example architecture **300** may include respective networks **210, 240** having respective security edge protection proxies (SEPP) **310, 312.** The SEPPs **310, 312** may provide for a path for signaling traffic across network. The communication between SEPPs **310, 312** may be authenticated and constitute all or part of an N32 interface. For example, the user plane functions **308** may establish communications over an N9 interface. The N9 interface may be encapsulated by the SEPPs **310, 312** and sent over the N32 interface between the two networks **210, 240.** Although shown as direct communication channels, all inter-PLMN communications (e.g., signaling communications) may be transmitted through the N32 interface.

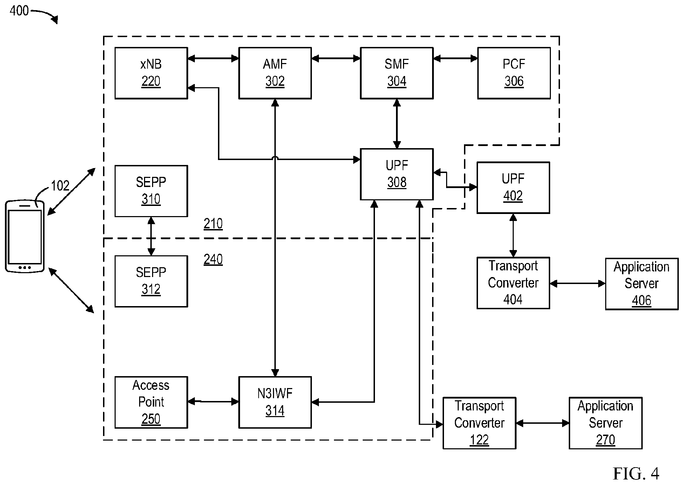

**FIG. 4** shows an example communication architecture **400** in accordance with one or more implementations of the present disclosure. The architecture **400** may include the computing device **122,** which may include instructions for the transport converter, on the edge of the network **210.** For example, a rule may exist to direct traffic and data requiring low-latency to a one-hop or less than five hop distance from the user plane function **308.** The rule may also be based on network conditions or network parameters. The transport converter may be located on the same network as network **210** or network **240** or a network that is operated by an operator of network **210** or network **240.** A rule may exist to further direct traffic to another user plane function **402** and transport converter **404** that is located on a public cloud. The transport converter may be configured to communicate with another application server **406.** The application server **406** may be on a public or private network.

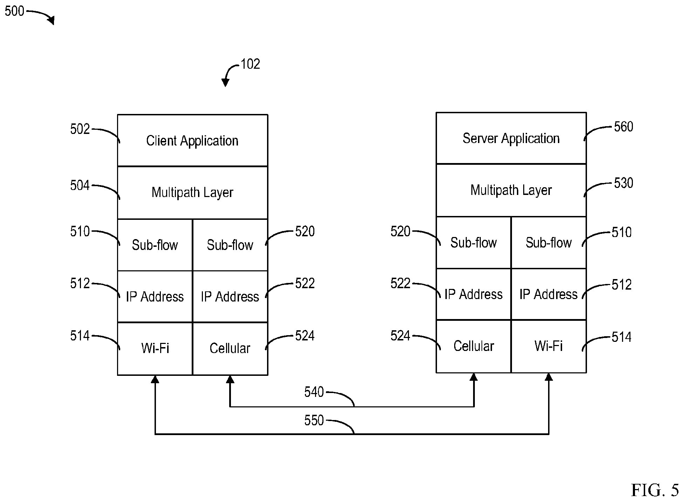

**FIG. 5** shows an example protocol stack **500** in accordance with one or more implementations of the present disclosure. The protocol stack **500** may include a client application **502.** The client application **502** may be a set of instructions that the device **102** is operable to execute. The client application **502** may be configured to generate packet-based communications. The device **102** may be configured to receive those packet-based communications and convert them to multipath communications with the multipath layer **504.** The multipath layer **504** may create two subflows **510, 520.** The subflows **510, 520** may be respectively assigned IP addresses **512, 522** according to respective communication mediums **514, 524.** The data may traverse over more than one path **540, 550** to the receiving side with similar layers to that of the device **102.** A multipath layer **530** may convert (e.g., a transport converter) the received multipath communications into a single path for the server application **560** that does not support multipath communications. The transport converter may be based on a 0-RTT protocol (e.g., Internet Engineering Task Force (IETF) request for comment (RFC) 8803).

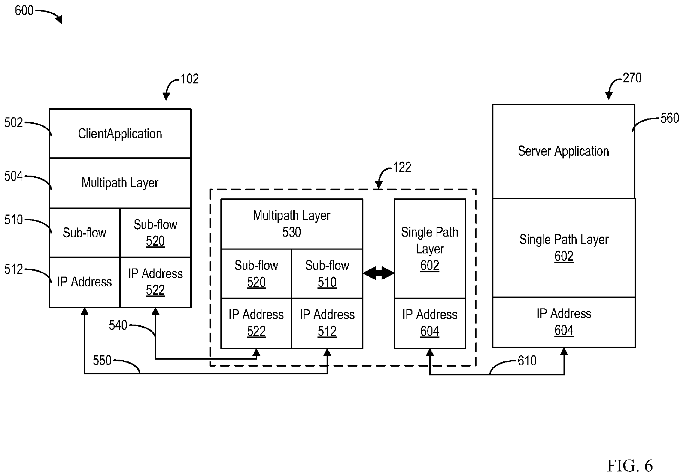

**FIG. 6** shows an example communication link **600** in accordance with one or more implementations of the present disclosure. The communication link **600** may include one or more nodes (e.g., xNB **220,** gateway **260**) associated with one or more networks **210, 240.** The device **102** may include instructions for executing a client application **502.** The device **102** may further include instructions for a multipath connection. A multipath connection may be based on multipath Transmission Control Protocol (MPTCP), multipath QUIC (MPQUIC), multipath Datagram Congestion Control Protocol (MPDCCP), another multipath protocol, or a combination thereof. An identifier may be assigned to designate the multipath connection. The multipath connection may include two subflows **510, 520** and may be based on multipath layer **504** and multipath layer **530.** The subflows **510, 520** may be identified based on a subflow sequence number. For example, the sequence numbers may be used to reassemble data sent over the multipath connection. For example, a data sequence mapping may be used to assemble data received over the path and data received over the path. The path **540** may comprise nodes or hops from network **210** (e.g., xNB **220,** UPF **214**) and the path **550** may comprise nodes or hops from network **240.** Each subflow may have an individual IP address **512, 522.** The paths may also include nodes or hops that are associated with the same network or intermingled.

The data may be assembled based on a data sequence mapping or map. The data sequence map may be based on a first subflow sequence number and a second subflow sequence number associated with each path, respectively. As such, the combination of the data from the path of the first network and the data of the path of the second network may be combined based on the data sequence mapping to establish ordered data without a loss of integrity. The response may be disassembled into portions and retransmitted over the respective paths to improve throughput and speed in a similar fashion.

The multipath connection may terminate at the computing device **122.** The computing device **122** may include instructions to perform transport conversion by a transport converter. The transport converter may be based on a 0-RTT protocol (e.g., Internet Engineering Task Force (IETF) request for comment (RFC) 8803). The transport converter may be configured to convert the multipath connection into a single path connection according to single path layer **602.** For example, the transport converter may serve as a proxy between the device **102** and the application server **270** and provide communications over multiple paths and subflows **510, 520.** The single path **610** may terminate at a server application **560.**

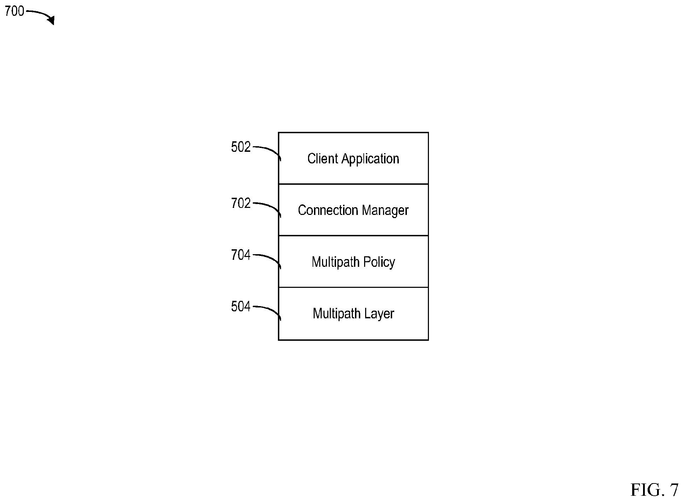

**FIG. 7** shows an example control framework **700** in accordance with one or more implementations of the present disclosure. The framework may include the client application **502** associated with a connection manager **702.** The connection manager **702** may include steering policies **704** (e.g., Access Traffic Steering, Switching & Splitting (ATSSS)) for connecting and disconnecting from a multipath communications. For example, the connection manager may include a policy **704** that comprises rules related to the access point **250** or xNB **220** of the networks **210, 240.** The connection manager may then control the multipath layer **504** and other elements of the Open Systems Interconnection (OSI) stack.

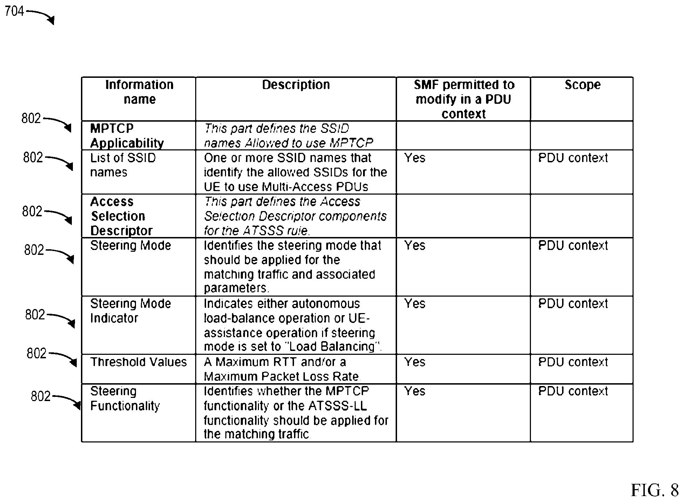

**FIG. 8** shows an example policy **704** in accordance with one or more implementations of the present disclosure. The policy **704** may include rules **802.** The rules **802** may be related to allowing or rejecting a multipath connection. The allowance may be based on a service set identifier (SSID) of an access point (e.g., access point **250**) or another moniker. For example, the rule may specify SSIDs that are being accessed by the device **102** and cause the device **102** to enable or disable multipath communications based on the moniker. The parameter or moniker may be a line identity associated with a cable modem, cable modem identity, or another indication related to a cable modem.

The policy **704** or rule may contain a set of monikers that are allowed to use multipath communications or a set of monikers that are required to disallow or reject multipath communications. As another example, a rule may include a set of monikers related to a physical cell identity of the cellular base station (e.g., xNB **220**) that is being accessed. The rule **802** may be configured to allow or disallow multipath access based on the moniker. Rules **802** may include a list or set of monikers that the device **102** may be allowed or prevented from performing multipath communications on. A list or set may include one or more elements (e.g., monikers). For example, the device **102** may roam between one or more access points (e.g., access point **250**) and base stations (e.g., xNB) and check the predefined list or set for monikers or other identifiers that indicate whether multipath communications are allowed or disallowed. That is, the rule may be based on positive logic or negative logic.

A rule **802** may also include allowed locations (e.g., geolocations, addresses, regions) that the device **102** may use multipath communications. For example, a GPS coordinate may be used to lookup a region that the device **102** is accessing services of networks **210, 240.** Such a region may be given a moniker or identifier and a rule **802** may include a list of those regions, coordinates, or addresses that allow or disallow multipath communications. For example, the rule **802** may correspond to the specific GPS coordinates or a lookup table identifying regions (e.g., counties, cities, states, designated areas) that allow or disallow such multipath communications based on the lookup.

A rule pertaining to multipath authorization may also be based on an access selection descriptor or steering mode specified by an ATSSS. For example, whether or not to allow or disallow multipath communications may be further based on the steering mode specified in the policy or otherwise.

Parameters other than the moniker of the origin node or edge node are contemplated. For example, the location of the origin node or edge node may be used to define the rule. Power ranges of the node may also be used to define the rule **802.** Rules may be based on one or more parameters associated with the device **102,** one or more of the networks **210, 240,** the application server **270,** other nodes or components, or combinations thereof.

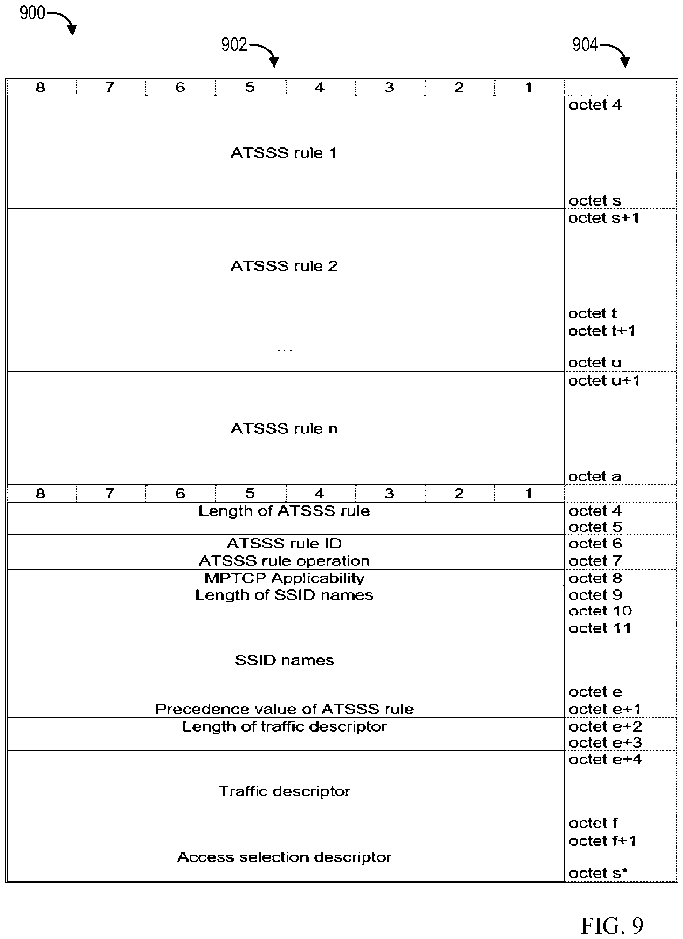

**FIG. 9** shows an example encoding **900** accordance with one or more implementations of the present disclosure. The encoding **900** shows how a policy **704** may be transmitted to the device **102** or node. For example, the policy **704** may include ATSSS rules and a multipath rule (e.g., MPTCP Applicability) in a particular octet. The multipath rule may be situated in any octet and may be defined according to a standard.

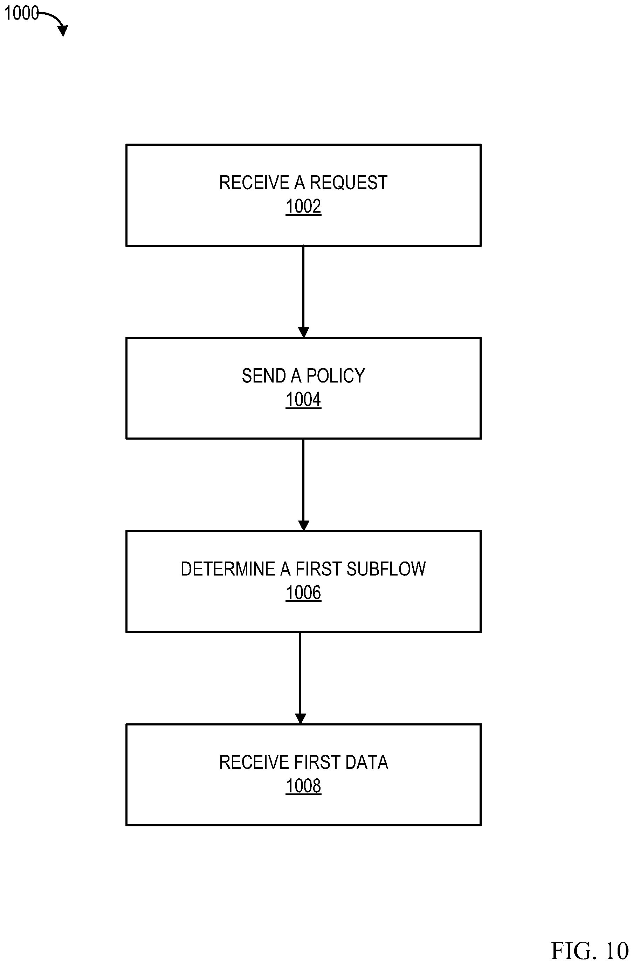

**FIG. 10** shows a flowchart of an example method **1000** in accordance with one or more implementations of the present disclosure. The method **1000** may be implemented by any of the devices or nodes discussed herein and combinations thereof. For example, the method **1000** may be implemented by the device **102,** the application server **270,** the computing device **122,** other nodes, and combinations thereof. In step **1002,** a request may be received. The request may comprise a request to connect a user device (e.g., device **102**) or another device to a network (e.g., network **210, 240**)**.** In step **1004,** a policy **704** may be sent to the requesting device (e.g., device **102**)**.** The policy **704** may be an ATSSS policy as discussed herein. The policy **704** may comprise a rule (e.g., rule **802**)**.** The rule may be based on positive or negative logic. For example, the rule may be related to a connection. The connection may be a multipath connection or portion thereof. For example, the rule may specify when a multipath connection may be allowed or denied. The rule may be based on an origin of the connection or an edge device of the connection. For example, the rule may be based on an access point (e.g., access point **250**) or base station (e.g., xNB **220**)**.**

In step **1006,** a subflow (e.g., subflow **510**) may be determined. The subflow may be based on the connection. The subflow may be based on the rule. For example, the subflow may be allowed because the rule allows the subflow to be formed. The subflow may be based on a path. For example, the path may include one or more nodes of networks **210, 240.** In step **1008,** data may be received based on the subflow.

A second subflow (e.g., subflow **520**) may be determined forming a multipath connection with the device **102.** For example, the subflow may have its own identifier and may be configured to receive data. Data received over the second subflow may be combined with data from the first subflow and sent to an application server (e.g., application server **270**)**.** In example, data received from the application server may be divided over the subflows and sent to the device **102.** Data sent to the application server based on data received from the subflows may be formed into one or more data packets.

The policy and rule may be pre-provisioned. For example, the policy and rule may be stored on the device **102** before a connection is attempted to either of the networks **210, 240.** Policies may be defined based on identifiers of the user device (e.g., device **102**) or other parameters. For example, the policies may be defined based on a service agreement and be individual to a user device (e.g., device **102**) or a group of user devices.

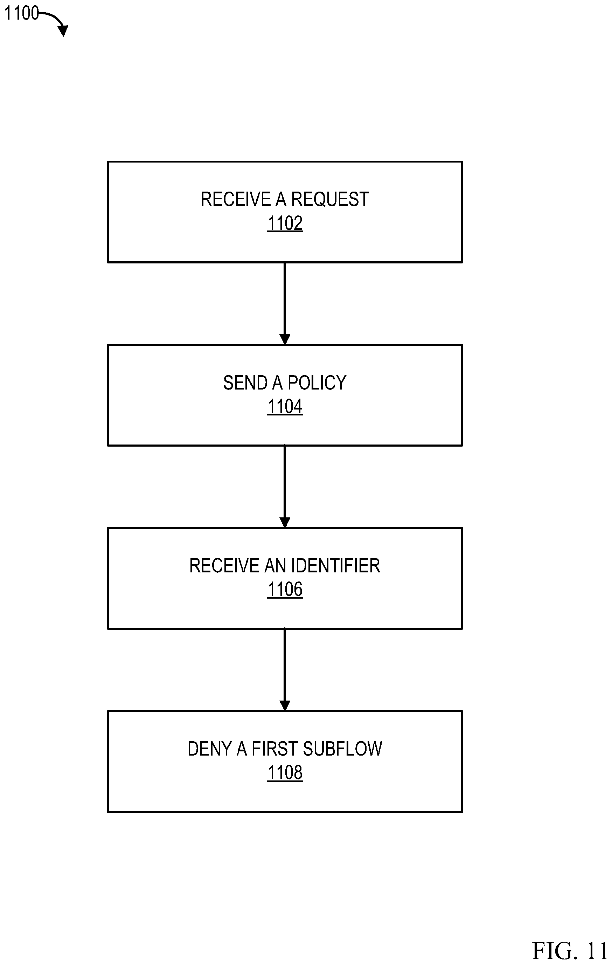

**FIG. 11** shows a flowchart of an example method **1100** in accordance with one or more implementations of the present disclosure. The method **1100** may be implemented by any of the devices or nodes discussed herein and combinations thereof. For example, the method **1000** may be implemented by the device **102,** the application server **270,** the computing device **122,** other nodes, and combinations thereof. In step **1102,** a request may be received. The request may comprise a request to connect a user device (e.g., device **102**) or another device to a network (e.g., network **210, 240**)**.** In step **1104,** a policy **704** may be sent to the requesting device (e.g., device **102**)**.** The policy **704** may be an ATSSS policy as discussed herein. The policy **704** may comprise a rule (e.g., rule **802**)**.** The rule may be based on positive or negative logic. For example, the rule may be related to a connection. The connection may be a multipath connection or portion thereof. For example, the rule may specify when a multipath connection may be allowed or denied. The rule may be based on an origin of the connection or an edge device of the connection. For example, the rule may be based on an access point (e.g., access point **250**) or base station (e.g., xNB **220**)**.**

In step **1106,** an identifier may be received from the device **102.** For example, the identifier may be an IP address. The IP address may be associated with a subflow. The IP address may be assigned by an access point (e.g., access point **250**) or base station (e.g., xNB **220**)**.** For example, the IP address may be related to a specific subnet or range of IP addresses assigned to the origin node or edge node. For example, the access point **250** may be allotted a predefined range of IP addresses for devices connected to the network **240.**

In step **1108,** the first subflow may be block, denied, or otherwise impeded based on the identifier. For example, the computing device **122** may determine that the IP address falls within a range of an origin node or edge node that is prevented from conducting multipath communications. The multipath communications, based on the subflow, may be blocked or impeded to prevent devices from using multipath communications when unitary communications or single path communications should be used.

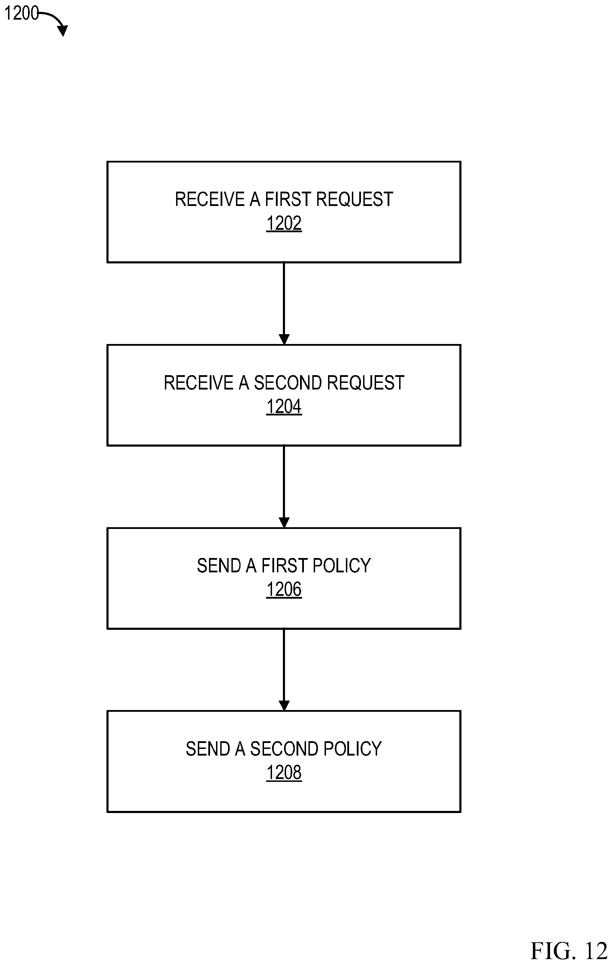

**FIG. 12** shows a flowchart of an example method **1200** in accordance with one or more implementations of the present disclosure. The method **1200** may be implemented by any of the devices or nodes discussed herein and combinations thereof. For example, the method **1000** may be implemented by the device **102,** the application server **270,** the computing device **122,** other nodes, and combinations thereof. In step **1202,** a first request may be received. The request may comprise a request to connect a first user device (e.g., device **102**) or another device to a network (e.g., network **210, 240**)**.** The first request may comprise an identifier of the first user device. In step **1204,** a second request may be received. The request may be to connect a second user device to a network (e.g., network **210, 240**)**.** The second request may comprise an identifier of the second user device.

In step **1206,** a first policy (e.g., policy **704**) may be sent to the requesting device (e.g., device **102**)**.** The first policy may be an ATSSS policy as discussed herein. The first policy may comprise a rule (e.g., rule **802**)**.** The rule may be based on positive or negative logic. For example, the rule may be related to a connection. The connection may be a multipath connection or portion thereof. For example, the rule may specify when a multipath connection may be allowed or denied. The rule may be based on an origin of the connection or an edge device of the connection. For example, the rule may be based on an access point (e.g., access point **250**) or base station (e.g., xNB **220**)**.**

In step **1208,** a second policy (e.g., policy **704**) may be sent to the requesting device (e.g., device **102**)**.** The second policy may be different from the first policy. The second policy may be specific to the second user device and may be based on the identifier of the user device that sent the request. For example, a policy server may determine, based on the identifier of the user device, which policy to send to the user device to govern multipath communications specifically for the user device. The policy may be further based on a subscription of the user device. The subscription may relate to the throughput or bandwidth available to the user device.

The network functions described herein may be generally referred to as a generic combination function that may run on one or more servers, one or more instances, one or more sets of instructions, and so on. Such instances may be containerized, replicated, scaled, and distributed by network **210, 240** to meet the growing demands of respective networks. Any of the steps or functions described in one or more of the methods, architectures, or call flows described herein may be used in conjunction with any of the other methods, architectures, or call flows described herein. Any of the components (e.g., network functions, user equipment, servers) may perform any of the steps from any of the methods or call flows described herein even though not specifically described and may be performed in combination with any of the other components. It should be appreciated that the techniques described herein relate to various protocols and technology and may at least apply to 3G, LTE, and 5G technologies.

While the methods and systems have been described in connection with preferred embodiments and specific examples, it is not intended that the scope be limited to the particular embodiments set forth, as the embodiments herein are intended in all respects to be illustrative rather than restrictive.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

It will be apparent to those skilled in the art that various modifications and variations can be made without departing from the scope or spirit. Other embodiments will be apparent to those skilled in the art from consideration of the specification and practice disclosed herein. It is intended that the specification and examples be considered as exemplary only, with a true scope and spirit being indicated by the following claims.

## Claims

1. A method comprising:
receiving a request to connect a user device to a first network;
sending, based on the request, a policy to the user device, wherein the policy comprises a rule for establishing a connection and the rule is based on an origin of the connection on the first network;
determining, based on the rule, a first subflow of the connection according to a first path; and
receiving, based on the first subflow, first data.

2. The method of claim 1, wherein the policy is an access traffic steering, switching, and splitting (ATSSS) policy.

3. The method of any one of claims 1-2, wherein the rule is based on a parameter of a node of the first network, the parameter is indicative of an authorization of the first subflow, and the node is the origin of the connection.

4. The method of claim 3, wherein the node is a cable modem or a cable modem termination system and the parameter is a line identity.

5. The method of claim 4, wherein the node is an access point and the parameter is a service set identifier (SSID).

6. The method of claim 4, wherein the node is a base station, and the parameter is a physical cell identity.

7. The method of any one of claims 1-2, wherein the rule is based on a parameter of a node of the first network, the parameter is indicative of a prohibition of the connection, and the node is the origin of the connection.

8. The method of any one of claims 1-7, wherein the connection is configured for more than one path.

9. The method of any one of claims 1-8, further comprising:
determining, based on the rule, a second subflow of the connection according to a second path; and
receiving, based on the second subflow, second data.

10. The method of claim 9, wherein the second path comprises a second network and the first network is operated by a first operator and the second network is operated by a second operator.

11. The method of claim 10, wherein the first operator is a mobile network operator (MNO) and the second operator is a multiple system operator (MSO).

12. The method of claim 9, wherein the first path comprises the origin and the second path comprises the origin.

13. One or more non-transitory computer-readable media storing processor-executable instructions that, when executed by a processor, cause the processor to perform the method of any one of claims 1-12.

14. A system comprising:
a computing device configured to perform the method of any one of claims 1-12; and
a user device configured to receive the policy.

15. An apparatus comprising:
one or more processors; and
a memory storing processor-executable instructions that, when executed by the one or more processors, cause the apparatus to perform the method of any one of claims 1-12.
